# EUROPÄISCHE PATENTSCHRIFT

(11) **EP 0 763 556 B1**
(45) Veröffentlichungstag und Bekanntmachung des Hinweises auf die Patenterteilung: **23.07.2003**
(21) Anmeldenummer: 96113984.7
(22) Anmeldetag: 02.09.1996
(51) Int. Cl.: C08G 77/08, C08G 77/16

(54) **Verfahren zur Kettenverlängerung von alpha,omega-Dihydroxypoly(diorganosiloxanen) und vernetzbare Mischungen, enthaltend kettenverlängerte alpha,omega-Dihydroxypoly(diorganosiloxane)**
Process for chain extension of alpha,omega-dihydroxypolydiorganosiloxanes and cross-linkable compositions containing these
Procédé d'extension de la chaîne des alpha,oméga-dihydroxypolydiorganosiloxanes et compositions réticulables les contenant

(30) Priorität: 13.09.1995 DE 19533892
(43) Veröffentlichungstag der Anmeldung: 19.03.1997
(73) Patentinhaber: GE Bayer Silicones GmbH & Co. KG, 40699 Erkrath (DE)
(72) Erfinder: Friebe, Robert, Dr., 51373 Leverkusen (DE); Sockel, Karl-Heinz, 51373 Leverkusen (DE)

(56) Entgegenhaltungen:
- EP-A- 0 065 925
- EP-A- 0 193 748
- EP-A- 0 382 367
- EP-A- 0 691 362
- DE-A- 2 935 616

## Beschreibung

Die vorliegende Erfindung betrifft ein Verfahren zur Kettenverlängerung von α,ω-Dihydroxy-poly(diorganosiloxanen), wonach niedermolekulare α,ω-Dihydroxypoly(diorganosiloxane) mit mindestens einem Phosporsäureester und/oder Orthophosphorsäure umgesetzt werden, vernetzbare Mischungen, enthaltend kettenverlängerte α,ω-Dihydroxypoly(diorganosiloxane) und die Verwendung der hergestellten α,ω-Dihydroxypoly(diorganosiloxane).

Zur Herstellung von α,ω-Dihydroxy-poly(diorganosiloxanen) sind verschiedene Verfahren bekannt. Die meisten technisch relevanten Verfahren beruhen dabei auf einer Hydrolyse von Organohalogensilanen und anschließender Kondensation und Polymerisation der Hydrolyseprodukte, die aus niedermolekularen Dihydroxydiorganosiloxanen und cyclischen Siloxanen bestehen. Die Kondensations- und Polymerisationsreaktionen finden üblicherweise in Gegenwart geeigneter Katalysatoren wie z.B. starker Säuren und Basen statt. Die technischen Herstellung dieser Produkte wird dabei in der Regel bei Temperaturen oberhalb von 80°C durchgeführt.

α,ω-Dihydroxy-poly(diorganosiloxane) werden in zahlreichen verschiedenen technischen Anwendungen eingesetzt. Dabei verwendet man in Abhängigkeit von dem jeweiligen Einsatzgebiet Produkte unterschiedlicher Konsistenz, die von niedrigviskosen Polymeren bis zu hochviskosen elastischen Materialien reicht. Ein bedeutsames Anwendungsgebiet solcher Polymere stellen 1- und 2-Komponenten Siliconmassen dar, im folgenden RTV-1 bzw. -2 (Raumtemperatur vulkanisierende 1 bzw. 2 Komponenten) Massen genannt, die durch Einwirkung von Wasser oder unter Zutritt von Luftfeuchtigkeit zu Elastomeren aushärten.

In bestimmten Anwendungen ist es wünschenswert über geeignete Verfahren zu verfügen, die es ermöglichen α,ω-Dihydroxy-poly(diorganosiloxane) einer definierten Kettenlänge im Verlauf der Herstellung der entsprechenden Formulierungen bzw. Produkte, in denen diese enthalten sind, zu erzeugen. Geeignete Verfahren müssen sich dabei durch kurze Reaktionszeiten, niedrige Temperaturen und hohe Ausbeuten an den gewünschten Endprodukten auszeichnen. Bei den Endprodukten ist es besonders wichtig, daß keine cyclischen Polysiloxane gebildet werden, wie dies bei einer Vielzahl bekannter Katalysatoren der Fall ist.

Aus EP-A 314 315 ist ein solches Verfahren bekannt, das auf der Kondensation von α,ω-Dihydroxy-poly(diorganosiloxanen) in Gegenwart von Sulfonsäuren, insbesondere der Dodecylbenzolsulfonsäure, beruht.

Aufgabe der vorliegenden Erfindung war die Bereitstellung eines Verfahrens zur Kettenverlängerung von α,ω-Dihydroxy-poly(diorganosiloxanen), welches schon nach kurzen Reaktionszeiten und niedrigen Temperaturen mit hoher Selektivität zu den gewünschten höhermolekularen α,ω-Dihydroxy-poly(diorganosiloxanen) führt.

Überraschenderweise wurde nun gefunden, daß aus niedermolekularen α,ω-Dihydroxydiorganosiloxanen durch Kettenverlängerung in Gegenwart von Phosphorsäureestern und/oder Orthophosphorsäure innerhalb kurzer Zeit im Molekulargewicht einstellbare, höhermolekulare α,ω-Dihydroxy-poly(diorganosiloxane) hergestellt werden können. Die Umsetzung kann dabei unter milden Bedingungen bereits bei Temperaturen unterhalb von 40°C durchgeführt werden. Zudem sind die nach dem erfindungsgemäßen Verfahren hergestellten höhermolekularen α,ω-Dihydroxy-poly(diorganosiloxane) besonders gut bei der Formulierung von RTV-1 und 2 Massen im Verlauf von deren Herstellung einsetzbar.

Dies war umso überraschender, als aus DE-A 26 53 499 bekannt ist, daß saure Phosphorsäureester einen Abbau von Poly(diorganosiloxane) bewirken.

Gegenstand der vorliegenden Erfindung ist daher ein Verfahren zur Kettenverlängerung von α,ω-Dihydroxy-poly(diorganosiloxanen), wonach niedermolekulare α,ω-Dihydroxydiorganosiloxane mit mindestens einem Phosphorsäureester und/oder Orthophosphorsäure umgesetzt werden.

Für das erfindungsgemäße Verfahren sind als niedermolekulare α,ω-Dihydroxydiorganosiloxane alle bekannten α,ω-Dihydroxy-poly(diorganosiloxane) geeignet, wobei die Organylreste C₁-C₁₈-Alkylreste, bevorzugt Methylreste sind. Die Methylreste können teilweise durch Vinyl-, Phenyl-, C₂-C₈-Alkyl- oder Halogenalkylgruppen ersetzt sein. Die Poly(diorganosiloxane) sind im wesentlichen linear, können jedoch auch Anteile an verzweigend wirkenden Organosiloxyeinheiten enthalten. Zudem kann das Poly(diorganosiloxan) partiell durch unreaktive Reste, wie beispielsweise Trimethylsiloxyreste, substituiert sein. In einer bevorzugten Ausführungsform der vorliegenden Erfindung besitzen die α,ω-Dihydroxy-poly(diorganosiloxane) eine Viskosität zwischen 10 und 150000 mPas, vorzugsweise zwischen 100 und 100000 mPas.

Als Katalysatoren werden vorzugsweise Orthophosphorsäure und/oder deren Ester der folgenden Formel (I)

O=P(OR)₃₋ₘ(OH)ₘ (I),

mit
- m =: 0, 1, 2 oder 3, bevorzugt 1, 2 oder 3,
- R =: gegebenenfalls substituierte lineare oder verzweigte C₁-C₃₀-Alkyl-, C₂-C₃₀-Alkenyl- oder Alkoxyalkyl, C₅-C₁₄-Cycloalkyl- oder Arylreste oder Triorganylsilyl- oder Diorganylalkoxysilylreste, die innerhalb des Moleküls gleich oder verschieden sein können,
und/oder Ester der Polyphosphorsäure eingesetzt.

In einer weiteren bevorzugten Ausführungsform der vorliegenden Erfindung sind die Phosphorsäureester Ester der Orthophosphorsäure mit mindestens einem gegebenfalls substituierten linearen oder verzweigten C₄-C₃₀-Alkylrest R.

Beispiele für besonders bevorzugte Phosphorsäurester sind primäre und sekundäre Ester der Orthophosphorsäure wie Dibutylphosphat, Di-(2-ethylhexyl)-phosphat, Dihexadecylphosphat, Diisononylphosphat, Mono-isodecylphosphat, Mono-(2-ethylhexyl)-phosphat und Di-(trimethylsilyl)-phosphat und/oder tertiäre Ester, wie Tris-(trimethylsilyl)-phosphat, Tributylphosphat und Trioctylphosphat.

Es können ebenfalls Ester der Polyphosphorsäure oder Gemische aus mehreren Polyphosphorsäureestern und/oder Orthophosphorsäureestern verwendet werden. Geeignet sind ebenfalls saure oder neutrale Salze der Ortho- und Polyphosphorsäure und deren Ester, wie z.B. Alkalimetallsalze.

Mit der vorliegenden Erfindung wurde festgestellt, daß die Kettenlänge bzw. Viskosität der hergestellten α,ω-Dihydroxy-poly(diorganosiloxane) über die Menge an eingesetzter Orthophosphorsäure und/oder deren Ester, Wasser sowie durch Verfahrensparameter wie Temperatur und Reaktionszeit gezielt eingestellt werden kann.

Die Phosphorsäureverbindungen werden vorzugsweise in einer Konzentration von 0,1 % bis 10 %, besonders bevorzugt zwischen 0,5 % und 5 %, bezogen auf die Gesamtmischung, eingesetzt.

Das erfindungsgemäße Verfahren wird bevorzugt bei Temperaturen unterhalb von 40°C, besonders bevorzugt bei Raumtemperatur durchgeführt. Die Erhöhung der Reaktionstemperatur über 40°C ist jedoch ebenfalls möglich und wird durch die Erfindung nicht ausgeschlossen.

Die Reaktionszeiten richten sich nach den verwendeten Ausgangsstoffen und dem gewünschten Grad der Umsetzung und können im Bereich von einigen wenigen Minuten bis mehreren Stunden liegen. In einer Ausführungsform der Erfindung bei Durchführung des Verfahrens im Verlauf der Herstellung von RTV-Massen werden Zeiten zwischen 5 und 60 Minuten bevorzugt. Dabei hat es sich günstig erwiesen, die Viskosität der Mischung im Verlauf der Umsetzung zu ermitteln. Über die gemessenen Daten kann man Rückschlüsse auf den Grad der Umsetzung ziehen und die Reaktion zu einem gewünschten Zeitpunkt abbrechen. Die Viskositätsmessung kann dabei sowohl kontinuierlich als auch diskontinuierlich durchgeführt werden.

In einer bevorzugten Ausführungsform der vorliegenden Erfindung wird der Phosphorsäureester und/oder die Orthophosphorsäure nach Ablauf der gewünschten Reaktion und vor dem Eintritt von produktschädigenden Umlagerungsreaktionen desaktiviert. Die Desaktivierung kann mittels Neutralisation, Komplexbildung oder sonstige Reaktion erfolgen. Dies ist z. B. durch Neutralisation der Orthophosphorsäure und/oder der sauren Phosphorsäureester mit basischen Verbindungen problemlos möglich. Zur Desaktivierung der Orthophosphorsäure und der Phosphorsäureester eignen sich alle starken und schwachen Basen wie Alkalimetallhydroxide und deren Silanolate oder Alkoholate, Tetraalkylammoniumhydroxide und Amine. Beispiele hierfür sind Natriumhydroxid, Kaliummethanolat, Tetramethylammoniumhydroxid, Triethylamin und Hexamethyldisilazan. Geeignet sind weiterhin Metalloxide, -sulfate, -silicate, -carbonate und -hydrogencarbonate. Bevorzugt eingesetzt werden hierbei gefällte und/oder gemahlene Kreiden. Das gebildete Neutralisationsprodukt kann im Polymer verbleiben oder durch geeignete Schritte wie Filtration und Herauswaschen entfernt werden.

Gegenstand der Erfindung sind zudem vernetzbare RTV-Massen, die nach dem erfindungsgemäßen Verfahren hergestellte α,ω-Dihydroxypoly(diorganosiloxane), Vernetzer, Katalysatoren sowie gegebenenfalls Füllstoffe, Weichmacher und weitere Additive enthalten. Dabei werden die bei der Umsetzung des niedrigmolekularen α,ω-Dihydroxypdiorganopolysiloxans mit Orthophosphorsäure und/oder Phosphorsäureestern und die im Anschluß daran erfolgte Desaktivierung erhaltenen α,ω-Dihydroxy-poly(diorganosiloxane) sowie alle zusätzlich benötigten Komponenten wie z.B. Vernetzer, Füllstoffe, Weichmacher, Katalysatoren und weitere Additive in das α,ω-Dihydroxy-poly(diorganosiloxan) eingearbeitet.

Vernetzer im Sinne der Erfindung sind alle nach dem Stand der Technik bekannten Silane mit Acetoxy-, Alkoxy-, Alkoxyalkoxy-, Aminoxy-, Amino-, Amido-, Acetamido- und Oximo-Gruppen. Beispiele hierfür sind Methyltriacetoxysilan, Ethyltriacetoxysilan, Methyltrimethoxysilan, Tetraethylsilicat, Vinyltriethoxysilan, Vinyltrimethoxysilan, Tetrapropylsilicat, Methyltris-(methylethylketoximo)silan, Methylethoxydi-N-methylbenzamidosilan, Methyltris-(butylamino)-silan und Methyltris-(diethylaminoxy)silan.

Füllstoffe im Sinne der Erfindung sind beispielsweise verstärkende Füllstoffe, wie z.B. pyrogene Kieselsäure und Ruß, semiverstärkende Füllstoffe, wie z.B. gefällte Kreide und gefällte Kieselsäure, nichtverstärkende Füllstoffe, wie z.B. gemahlene Naturkreide, Quarzmehl, wasserunlösliche Metall-Silicate, Carbonate, Oxide und Sulfate, wobei die eingesetzten Füllstoffe auch oberflächemodifiziert sein können.

Weichmacher im Sinne der Erfindung sind z.B. Polydimethylsiloxane mit Trimethylsiloxyendgruppen und einer Viskosität von 0,1 bis 5 Pas.

Katalysatoren im Sinne der Erfindung sind alle nach dem Stand der Technik in kondensationsvernetzenden Polysiloxanmassen gebräuchlichen Katalysatoren geeignet. Besonders bevorzugt sind organische Titan- und Zinnverbindungen. Besonders bevorzugte Zinnverbindungen sind z.B. Diorganozinndicarboxylate, wie Dibutylzinndilaurat und Dioctylzinnmeleat sowie Lösungen von Diorganozinnoxiden in Kieselsäureestern. Bevorzugte Titanverbindungen sind beispielsweise Alkyltitanate, wie Tetraisopropyltitanat, Tetrabutyltitanat und chelatisierte Titanverbindungen, wie Diisobutyl-bisacetessigsäureethylester-titanat.

Weitere Additive im Sinne der Erfindung sind z.B. Haftmittel, Pigmente und Fungizide. Als Haftmittel bevorzugt sind organofunktionelle Silane der Formeln:

X―CH₂-CH₂―CH₂-Si(OR¹)₃

mit
- X =: ―NH―CH₂―CH₂-NH₂ , 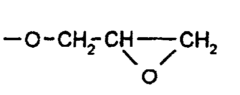 -O―C(O)―C(CH₃)=CH₂ , -SH , -OH , -Cl,
wobei
- R¹: die Bedeutung von gegebenenfalls substituierten C₁-C₈-Alkylresten hat.

Zur Herstellung der erfindungsgemäßen vernetzbaren Mischung werden die kettenverlängerten α,ω-Dihydroxypolydiorganosiloxane mit den zusätzlich benötigten Komponenten homogen verrührt.

Die Herstellung der RTV Massen kann in allen nach dem Stand der Technik gebräuchlichen Mischaggregaten erfolgen wie z.B. Planetenmischer, Dissolvern, Butterfly-Mischern oder kontinuierlich arbeitenden Mischschnecken.

Gegenstand der Erfindung ist zudem die Verwendung der nach dem erfindungsgemäßen Verfahren hergestellten α,ω-Dihydroxy-poly(diorganosiloxane) zur Herstellung von RTV-Massen.

Die folgenden Beispiele dienen der Erläuterung der Erfindung ohne jedoch begrenzend zu wirken.

### Ausführungsbeispiele

### Allgemeine Anmerkung:

Alle Viskositäten wurden mittels eines Haake-Rotationsviskosimeters gemessen.

### Beispiel 1

Zu 100 Gew.-Teilen Polydimethylsiloxans mit Si(CH₃)₂OH-Endgruppen, das eine Viskosität von 0,5 Pas bei 25°C besaß, wurden bei Raumtemperatur a) 2,0 bzw. b) 4,0 Gew.-Teile Di-2-ethylhexylphosphat gegeben. Die Viskositäten der Mischungen stiegen stark an und können aus Tabelle 1 entnommen werden.

**Tabelle 1**

| **Zeit [Minuten]** | **Viskosität [Pas]** | |
|---|---|---|
| | a) | b) |
| 5 | 2,0 | 2,0 |
| 50 | 8,9 | 58,4 |
| 100 | 127,7 | 177,2 |
| 1440 | 574 | 302 |

### Beispiel 2

Es wurde analog Beispiel 1 verfahren und ein Polydimethylsiloxans mit Si(CH₃)₂OH-Endgruppen und einer Viskosität von 0,5 Pas bei 25°C bei Raumtemperatur mit 4,0 Gew.-% Di-2-ethylhexylphosphat und Wasser mit a) 0,6 Gew.-%, b) 1,25 Gew.-% und c) 2,5 Gew.-% vermischt. Es wurde ein starker Viskositätsaufbau beobachtet (siehe Tabelle 2). Wie aus den Ergebnissen in Tabelle 2 ersichtlich wird, sinkt mit steigendem Wassergehalt die Endviskosität der Mischungen nach 24 Stunden.

**Tabelle 2**

| **Zeit [Minuten]** | **Viskosität [Pas]** | | |
|---|---|---|---|
| | a) | b) | c) |
| 22 | 4,9 | 4,9 | 4,9 |
| 50 | 60,4 | 62,4 | 61,4 |
| 64 | 107,9 | 102,0 | 103,0 |
| 1440 | 348 | 311 | 260 |

### Beispiel 3

Es wurde analog Beispiel 1 verfahren und ein Polydimethylsiloxans mit Si(CH₃)₂OH-Endgruppen und einer Viskosität von 50 Pas bei 25°C bei Raumtemperatur mit a) 0,5 Gew.-%, b) 1,0 Gew.-% und c) 2,0 Gew.-% Di-2-ethylhexylphosphat vermischt. Es wurde ein starker Viskositätsaufbau beobachtet (siehe Tabelle 3). Mit steigender Konzentration an Katalysator nimmt die Geschwindigkeit des Kettenaufbaus zu.

**Tabelle 3**

| **Zeit [Minuten]** | **Viskosität [Pas]** | | |
|---|---|---|---|
| | a) | b) | c) |
| 1 | 43,6 | 46,5 | 46,5 |
| 5 | 51,5 | 58,4 | 66,3 |
| 20 | 72,3 | 93,1 | 109,9 |
| 30 | - | 134,6 | - |
| 40 | 114,8 | - | - |

Die folgenden Beispiele dienen der Demonstration, daß die nach dem erfindungsgemäßen Verfahren hergestellten Polymere zur Herstellung von RTV-Massen geeignet sind. Die Herstellung der Polymere und RTV-Massen wurde in einem "Eintopfverfahren" durchgeführt, d.h. es wurde zunächst das α,ω-Dihydroxy-poly(diorganosiloxan) hergestellt und anschließend die RTV-Masse formuliert.

Die Herstellung des α,ω-Dihydroxy-poly(diorganosiloxans) und der RTV-Massen erfolgte in einem 1 l-Plantenmischer einsprechend den im folgenden aufgeführten Beispielen. Nach Abschluß der Herstellung wurden die Massen in Kunststoffkartuschen gefüllt. Aus den verschlossenen Kartuschen wurde Material für die entsprechenden weiteren Prüfungen entnommen. Das Vernetzungsverhalten der Polysiloxanmassen wurde auf einer Glasplatte geprüft, wozu die Pasten in einer Schichtdicke von 2 mm auf einer Fläche von 40 mal 60 mm aufgetragen wurden. Nach 24 Stunden wurde die Durchhärtung des Material bis zur Glasoberfläche geprüft. Zur Ermittlung der mechanischen Eigenschaften der Vulkanisate wurden die Pasten in 2 mm dicken Schichten ausgezogen und nach 14tägiger Aushärtung bei 23°C und 50% relativer Luftfeuchtigkeit nach DIN 53 504 geprüft. Die Härte wurde nach 14 Tagen entsprechend DIN 53 505 ermittelt.

### Beispiel 4

In einem Planetenmischer wurden 55,0 Gew.-Teile eines Polydimethylsiloxans mit Si(CH₃)₂OH-Endgruppen, das eine Viskosität von 50 Pas bei 25°C besaß, mit 1,0 Gew.-Teilen Di-2-ethylhexylphosphat vermischt. Die Viskosität der Mischung betrug sofort nach dem Vermischen 65 Pas und stieg innerhalb von 13 Minuten auf 130 Pas. Durch Zugabe von 40 Gew.-Teilen einer gefällten Kreide mit einer Oberfläche nach BET von 19 m²/g wurde der Kettenaufbau beendet und der Ester neutralisiert. Anschließend wurden 3,0 Gew.-Teile Methyltrimethoxysilan, 1,0 Gew.-Teilen Diisobutyl-bisacetessigsäureethylestertitant und 0,1 Gew.-Teile N-(2-Aminoethyl)-3-aminopropyl-trimethoxysilan zugegeben.

Die Paste härtet innerhalb von 24 Stunden einwandfrei zu einem Elastomer aus. Die mechanischen Prüfungen ergaben folgende Ergebnisse:

| | |
|---|---|
| Härte (DIN 53 505) | 33 Shore A |
| Zugfestigkeit (DIN 53 504) | 2,74 MPa |
| Dehnung (DIN 53 504) | 942% |
| Zugspannung bei 100% Dehnung (DIN 53 504) | 0,55 MPa |

### Vergleichsbeispiel 5

Beispiel 4 wurde wiederholt, wobei jedoch zunächst das Polymer mit der Kreide vermischt wurden und im Anschluß daran das Di-2-ethylhexylphosphat hinzugegeben wurde.

Die Paste härtet innerhalb von 24 Stunden einwandfrei zu einem Elastomer aus. Die mechanischen Prüfungen ergaben folgende Ergebnisse:

| | |
|---|---|
| Härte (DIN 53 505) | 36 Shore A |
| Zugfestigkeit (DIN 53 504) | 2,37 MPa |
| Dehnung (DIN 53 504) | 685% |
| Zugspannung bei 100 % Dehnung (DIN 53 504) | 0,65 MPa |

Dieses Beispiel zeigt, daß das Vulkanisat eine höhere Härte und Zugspannung sowie niedrigere Dehnung als Beispiel 4 aufweist. Dies ist ein eindeutiger Hinweis darauf, daß eine Kettenverlängerung des Polymers bei Beispiel 4 stattgefunden hat, jedoch bei dem Vergleichsbeispiel 5 durch die abweichende Mischreihenfolge eine sofortige Reaktion mit der Kreide stattgefunden hat, ohne daß eine Kettenverlängerung des Polymers erfolgte.

### Vergleichsbeispiel 6

Beispiel 4 wurde wiederholt, wobei jedoch auf die Zugabe von Di-2-ethylhexylphosphat verzichtet wurde.

Die Paste härtet innerhalb von 24 Stunden einwandfrei zu einem Elastomer aus. Die mechanischen Prüfungen ergaben folgende Ergebnisse:

| | |
|---|---|
| Härte (DIN 53 505) | 42 Shore A |
| Zugfestigkeit (DIN 53 504) | 2,59 MPa |
| Dehnung (DIN 53 504) | 446% |
| Zugspannung bei 100% Dehnung (DIN 53 504) | 0,88 MPa |

Der Vergleich der Ergebnisse mit Beispiel 4 zeigt, daß eine RTV-1 Masse ohne jeglichen Zusatz von Di-2-ethylhexylphosphat ein sehr hartes Vulkanisat mit hohen Zugspannungen und niedrigeren Dehnungen liefert. Die schlechten mechanischen Eigenschaften schrenken die Einsatzmöglichkeit eines solchen Produktes aufgrund der technischen Nachteile sehr stark ein.

## Patentansprüche

1. Verfahren zur Kettenverlängerung von α,ω-Dihydroxypoly(diorganosiloxanen), **dadurch gekennzeichnet, daß** niedermolekulare α,ω-Dihydroxypoly(diorganosiloxane) mit mindestens einem Phosphorsäureester und/oder Orthophosphorsäure umgesetzt werden.

2. Verfahren nach Anspruch 1, **dadurch gekennzeichnet, daß** die eingesetzten niedermolekularen α,ω-Dihydroxy-poly(diorganosiloxane) eine Viskosität zwischen 10 und 150 000 mPa·s besitzen.

3. Verfahren nach einem der Ansprüche 1 bis 2, **dadurch gekennzeichnet, daß** als Katalysatoren Orthophosphorsäure und/oder deren Ester der allgemeinen Formel
O=P(OR)₃₋ₘ(OH)ₘ (I),
mit
m = 0, 1, 2 oder 3 und
R = gegebenenfalls substituierte lineare oder verzweigte C₁-C₃₀-Alkyl-, C₂-C₃₀-Alkenyl- oder Alkoxyalkyl, C₅-C₁₄-Cycloalkyl- oder Arylreste oder Triorganylsilyl- oder Diorganylalkoxysilylreste, die innerhalb des Moleküls gleich oder verschieden sein können,
und/oder Ester der Polyphosphorsäure, eingesetzt werden.

4. Verfahren nach einem der Ansprüche 1 bis 3, **dadurch gekennzeichnet, daß** als Ester der Orthophosphorsäure Dibutylphosphat, Di-(2-ethylhexyl)-phosphat, Dihexadecylphosphat, Diisononylphosphat, Mono-isodecylphosphat, Mono-(2-ethylhexyl)-phosphat, Di-(trimethylsilyl)-phosphat und Tris-(trimethylsilyl)-phosphat und/oder tertiäre Ester eingesetzt werden.

5. Verfahren nach einem der Ansprüche 1 bis 4, **dadurch gekennzeichnet, daß** es bei Temperaturen ≤ 40°C durchgeführt wird.

6. Verfahren nach einem der Ansprüche 1 bis 5, **dadurch gekennzeichnet, daß** der Phosphorsäureester und/oder die Orthophosphorsäure nach Ablauf der gewünschten Reaktion und vor dem Eintritt von produktschädigenden Umlagerungsreaktionen desaktiviert wird.

7. Verfahren nach Anspruch 6, **dadurch gekennzeichnet, daß** die Desaktivierung mit gefällter oder gemahlener Kreide erfolgt.

8. Vernetzbare RTV-Massen, enthaltend nach einem der Ansprüche 1 bis 7 hergestellte α,ω-Dihydroxy-poly(diorganosiloxane), Vernetzer, Katalysatoren sowie gegebenenfalls Füllstoffe und weitere Additive.

9. Verwendung des nach den Ansprüchen 1 bis 7 erhaltenen α,ω-Dihydroxypoly(diorganosiloxane) zur Herstellung von RTV-Massen.

## Claims

1. Process for chain extension of α,ω-dihydroxypoly(diorganosiloxane)s, **characterized in that** low molecular weight α,ω-dihydroxypoly(diorganosiloxane)s are reacted with at least one phosphoric ester and/or orthophosphoric acid.

2. Process according to Claim 1, **characterized in that** the low molecular weight α,ω-dihydroxypoly(diorganosiloxane)s used have a viscosity between 10 and 150 000 mPa·s.

3. Process according to either of Claims 1 to 2, **characterized in that** orthophosphoric acid and/or its esters of the general formula
O=P(OR)₃₋ₘ(OH)ₘ (I)
where
m = 0, 1, 2 or 3, and
R = optionally substituted linear or branched C₁-C₃₀-alkyl, C₂-C₃₀-alkenyl or alkoxyalkyl, C₅-C₁₄-cycloalkyl or aryl radicals or triorganosilyl or diorganoalkoxysilyl radicals, which may be identical or different within the molecule, and/or esters of polyphosphoric acid are used as catalysts.

4. Process according to any of Claims 1 to 3, **characterized in that** the esters of orthophosphoric acid used are dibutyl phosphate, di(2-ethylhexyl) phosphate, dihexadecyl phosphate, diisononyl phosphate, monoisodecyl phosphate, mono(2-ethylhexyl) phosphate, di(trimethylsilyl) phosphate and tris(trimethylsilyl) phosphate and/or tertiary esters.

5. Process according to any of Claims 1 to 4, **characterized in that** it is carried out at temperatures ≤ 40°C.

6. Process according to any of Claims 1 to 5, **characterized in that** the phosphoric ester and/or the orthophosphoric acid is deactivated after expiry of the desired reaction and before onset of product-damaging rearrangement reactions.

7. Process according to Claim 6, **characterized in that** deactivation is effected with precipitated or ground chalk.

8. Crosslinkable RTV compositions containing α,ω-dihydroxypoly(diorganosiloxane)s prepared according to any of Claims 1 to 7, crosslinkers, catalysts and optionally fillers and further additives.

9. Use of the α,ω-dihydroxypoly(diorganosiloxane)s obtained according to Claims 1 to 7 for preparing RTV compositions.

## Revendications

1. Procédé pour l'allongement de chaîne d'α,ω-dihydroxypoly(diorganosiloxanes), **caractérisé en ce que** l'on fait réagir des α,ω-dihydroxy-poly(diorganosiloxanes) de faible poids moléculaire avec au moins un ester d'acide phosphorique et/ou de l'acide orthophosphorique.

2. Procédé selon la revendication 1, **caractérisé en ce que** les α,ω-dihydroxy-poly(diorganosiloxanes) de faible poids moléculaire utilisés présentent une viscosité comprise entre 10 et 150 000 mPa.s.

3. Procédé selon l'une quelconque des revendications 1 à 2, **caractérisé en ce que** l'on utilise comme catalyseurs de l'acide orthophosphorique et/ou des esters de celui-ci de la formule générale
O = P(OR)₃₋ₘ(OH)ₘ (I)
avec
m = 0, 1, 2 ou 3 et
R = des restes alkyle en C₁-C₃₀, alcényl- ou alcoxyalkyle en C₂-C₃₀, cycloalkyle ou aryle en C₅-C₁₄ linéaire ou ramifié, éventuellement substitué ou des restes triorganylsilyle ou diorganylalcoxysilyle, lesquels peuvent être identiques ou différents à l'intérieur de la molécule,
et/ou des esters de l'acide polyphosphorique.

4. Procédé selon l'une quelconque des revendications 1 à 3, **caractérisé en ce que** l'on utilise comme ester de l'acide orthophosphorique le phosphate de dibutyle, le phosphate de di-(2-éthylhexyle), le phosphate de dihexadécyle, le phosphate de diisononyle, le phosphate de mono-isodécyle, le phosphate de mono-(2-éthylhexyle), le phosphate de di-(triméthylsilyle) et le phosphate de tris-(triméthylsilyle) et/ou des esters tertiaires.

5. Procédé selon l'une quelconque des revendications 1 à 4, **caractérisé en ce qu'**il est réalisé à des températures ≤ 40°C.

6. Procédé selon l'une quelconque des revendications 1 à 5, **caractérisé en ce que** l'ester d'acide phosphorique et/ou l'acide orthophosphorique est désactivé après le déroulement de la réaction souhaitée et avant l'apparition de réactions de transposition nocives pour les produits.

7. Procédé selon la revendication 6, **caractérisé en ce que** la désactivation est réalisée avec de la craie précipitée ou moulue.

8. Masses RTV (vulcanisées à température ambiante) réticulables contenant des α,ω-dihydrnxy-poly-(diorganosiloxanes) préparés selon l'une quelconque des revendications 1 à 7, un agent de réticulation, des catalyseurs ainsi qu'éventuellement des charges et d'autres additifs.

9. Utilisation de l'α,ω-dihydroxy-poly(diorganosiloxane) obtenu selon les revendications 1 à 7 pour la préparation de masses RTV.
